# EUROPEAN PATENT APPLICATION

(11) **EP 4 822 882 A1**
(43) Date of publication of application: **14.10.2026**
(21) Application number: 24928004.1
(22) Date of filing: 13.08.2024
(51) Int. Cl.: H01M 50/543, H01M 50/502, H01M 50/503, H01M 50/559, H01M 10/0585, H01M 50/533

(54) **BATTERY CELL, BATTERY UNIT, BATTERY PACK, AND ELECTRIC DEVICE**

(30) Priority: 08.03.2024 CN 202410268794
(71) Applicant: Contemporary Amperex Technology Co., Limited, Ningde, Fujian 352100 (CN)
(72) Inventor: SU, Huasheng, Ningde, Fujian 352100 (CN)
(74) Representative: Straus, Alexander
(86) International application number: PCT/CN2024/111831
(87) International publication number: WO 2025/185073

(57) **Abstract**

A battery cell, a battery unit, a battery pack, and an electric device, relating to the technical field of batteries. The battery cell comprises a casing assembly (1), a bare cell (2), and poles (3). The bare cell (2) is arranged inside the casing assembly (1). The poles (3) are arranged on the casing assembly (1). The poles (3) are electrically connected to tabs (20) of the bare cell (2). Each pole (3) comprises a first connecting part (30) and a second connecting part (31) which are connected to each other. When projected along an arrangement direction of the bare cell (2) and the poles (3), the projection area of the first connecting part (30) and the projection area of the second connecting part (31) do not overlap. The first connecting part (30) is welded to the corresponding tab (20) of the bare cell (2). The second connecting part (31) is welded to a busbar. The technical solution can increase the space utilization rate of a battery cell and improves the energy density of the battery cell.

## Description

### CROSS-REFERENCE TO RELATED APPLICATIONS

The present disclosure is filed based on and claims priority to Chinese Patent Application No. 202410268794.3, filed on March 8, 2024 and entitled "BATTERY CELL, BATTERY UNIT, BATTERY PACK, AND ELECTRIC APPARATUS", the entire content of which is incorporated herein by reference.

### TECHNICAL FIELD

The present disclosure relates to the technical field of batteries, and in particular, to a battery cell, a battery unit, a battery pack, and an electric apparatus.

### BACKGROUND

New energy batteries are increasingly more widely applied in life and industry. For example, new energy vehicles equipped with batteries have been widely used. In addition, batteries are increasingly applied in the field of energy storage and the like.

In related technologies, the space utilization rate of a battery cell is low.

### SUMMARY OF THE INVENTION

To solve the aforementioned technical problem, the present disclosure provides a battery cell, a battery unit, a battery pack, and an electric apparatus, so as to increase the space utilization rate of the battery cell.

The present disclosure is implemented through the following technical solutions.

A first aspect of the embodiments of the present disclosure provides a battery cell, including:
a shell assembly;
a bare cell disposed inside the shell assembly; and
terminal posts disposed on the shell assembly, the terminal posts being electrically connected to tabs of the bare cell, the number of the terminal posts being at least two, where at least one of the terminal posts is electrically connected to a positive tab of the bare cell, and at least one of the terminal posts is electrically connected to a negative tab of the bare cell, and the terminal posts each including a first connection portion and a second connection portion connected to each other, where when projected along an arrangement direction of the bare cell and the terminal posts, a projection region of the first connection portion and a projection region of the second connection portion do not overlap with each other, and the first connection portion is welded to a tab of the bare cell and the second connection portion is configured to be welded to a busbar.

In the solution of the embodiment of the present disclosure, the terminal posts are disposed on the shell assembly, where the first connection portion of each of the terminal posts is welded to the tab of the bare cell, and the second connection portion is configured to be welded to the busbar, and when projected along the arrangement direction of the bare cell and the terminal posts, the projection region of the first connection portion and the projection region of the second connection portion do not overlap with each other. The first connection portion and the second connection portion need to be welded to the tab and the busbar, respectively. Arranging the first connection portion and the second connection portion side by side can reduce the occupation of the overall terminal post in the height direction of the battery cell, so that under the condition of a fixed height of the battery cell, the height of the bare cell can be made as large as possible, thereby increasing the space utilization rate of the battery cell and increasing the energy density of the battery cell.

In an embodiment, at least one of the terminal posts is a composite terminal post, the first connection portion and the second connection portion of the composite terminal post being made of different materials, and a material of the tab welded to the first connection portion being the same as a material of the first connection portion.

In the solution of the embodiment of the present disclosure, the material of the tab welded to the first connection portion is the same as the material of the first connection portion, so the convection capability between the first connection portion and the corresponding tab is relatively good. The material of the positive tab of the bare cell is different from the material of the negative tab. After the busbar is welded to the second connection portion, it needs to be welded to the corresponding tab of another battery cell. Correspondingly, the materials of the first connection portion and the second connection portion are different. Furthermore, a terminal post made of composite materials can combine the advantages of multiple materials to increase the current carrying capacity and corrosion resistance of the terminal post.

In an embodiment, the material of the first connection portion of the composite terminal post is copper, and the material of the second connection portion of the composite terminal post is aluminum.

In the solution of the embodiment of the present disclosure, the material of the first connection portion is copper, and the material of the second connection portion is aluminum. The copper-aluminum composite terminal post has good corrosion resistance and can maintain good stability under various environmental conditions. Furthermore, the copper-aluminum composite terminal post also has good wear resistance, and thus can withstand the influence of stress during the operation of the battery, and is not prone to damage.

In an embodiment, a thickness dimension of the first connection portion ranges from 0.5 mm to 5 mm.

In the solution of the embodiments of the present disclosure, the thickness of the first connection portion being within a relatively suitable range can balance achieving a relatively high welding strength between the first connection portion and the tab and making the thickness of the terminal post as small as possible, thereby making the energy density of the battery cell as large as possible.

In an embodiment, a thickness dimension of the second connection portion ranges from 1.5 mm to 5 mm.

In the embodiment of the present disclosure, the thickness of the second connection portion being within a relatively suitable range can balance achieving a relatively high welding strength between the second connection portion and the busbar and making the thickness of the terminal post as small as possible, thereby making the energy density of the battery cell as large as possible.

In an embodiment, a thickness of the first connection portion is equal to a thickness of the second connection portion.

In the embodiment of the present disclosure, the thickness of the first connection portion is equal to the thickness of the second connection portion, which reduces the difficulty of positioning the first connection portion and the second connection portion during the connection process, thereby making the processing of the terminal post relatively simple.

In an embodiment, the terminal post for electrical connection with the positive tab of the bare cell and the terminal post for electrical connection with the negative tab of the bare cell are arranged at intervals along a preset direction, the arrangement direction of the terminal posts and the bare cell being arranged intersecting with the preset direction, and the first connection portion and the second connection portion are arranged along the preset direction.

In the embodiment of the present disclosure, the first connection portion and the second connection portion are arranged along the preset direction, and the shell assembly can have a large space to arrange the first connection portion and the second connection portion, so that the dimensions of the first connection portion and the second connection portion along the preset direction can be made large, thereby reducing the difficulty of positioning the first connection portion and the second connection portion during the welding process, thus reducing the manufacturing difficulty of the battery cell.

In an embodiment, along the preset direction, a dimension of the second connection portion is greater than or equal to a dimension of the first connection portion.

In the embodiment of the present disclosure, during the welding process between the terminal post and the busbar, the positioning difficulty is greater than that during the welding between the terminal post and the tab. The dimension of the second connection portion being greater than or equal to the dimension of the first connection portion can alleviate the situation where the positioning of the busbar needs to take a long time during the welding process between the second connection portion and the busbar, thereby improving the welding efficiency.

A second aspect of the present disclosure provides a battery unit, including:
at least two battery cells according to any one of the aforementioned; and
one or at least two busbars, each of the busbars being electrically connected to the terminal post of a corresponding one of the battery cells and the second connection portion of a corresponding another one of the battery cells, respectively.

In an embodiment, a material of the busbar is the same as a material of the second connection portion.

In the embodiments of the present disclosure, the material of the busbar is the same as the material of the second connection portion, so the convection capability between the busbar and the second connection portion is relatively good.

A third aspect of the present disclosure provides a battery pack, including:
a mounting case; and
the battery unit according to any one of the aforementioned, disposed inside the mounting case.

A fourth aspect of the embodiments of the present disclosure provides an electric apparatus, including:
an apparatus body; and
the battery pack according to any one of the aforementioned, configured to supply power to the apparatus body.

### Effects of the Invention:

In the embodiments of the present disclosure, the terminal posts are disposed on the shell assembly, where the first connection portion of each of the terminal posts is welded to the tab of the bare cell, and the second connection portion is configured to be welded to the busbar, and when projected along the arrangement direction of the bare cell and the terminal posts, the projection region of the first connection portion and the projection region of the second connection portion do not overlap with each other. The first connection portion and the second connection portion need to be welded to the tab and the busbar, respectively. Arranging the first connection portion and the second connection portion side by side can reduce the occupation of the overall terminal post in the height direction of the battery cell, so that under the condition of a fixed height of the battery cell, the height of the bare cell can be made as large as possible, thereby increasing the space utilization rate of the battery cell and increasing the energy density of the battery cell.

### BRIEF DESCRIPTION OF THE DRAWINGS

By reading the detailed description of the preferred implementations below, various other advantages and benefits will become apparent to those of ordinary skill in the art. The drawings are for the purpose of illustrating the preferred implementations only and are not to be considered a limitation to the present disclosure. Moreover, in all of the drawings, the same components are indicated by the same reference numerals. In the accompanying drawings:
FIG. 1 is an exploded structural view of a battery unit according to an embodiment of the present disclosure;
FIG. 2 is a schematic assembly view of a shell assembly and terminal posts according to an embodiment of the present disclosure;
FIG. 3 is a schematic structural view of a battery unit according to an embodiment of the present disclosure; and
FIG. 4 is a partially enlarged view of position A in FIG. 3.

### Description of Reference Numerals

1, shell assembly; 2, bare cell; 20, tab; 3, terminal post; 3a, preset direction; 3b, thickness direction; 30, first connection portion; 31, second connection portion.

### DETAILED DESCRIPTION

The embodiments of the technical solutions of the present disclosure will be described in detail below with reference to the accompanying drawings. The following examples are only used to illustrate the technical solutions of the present disclosure more clearly, and are therefore used only as examples, and should not be used to limit the protection scope of the present disclosure.

Unless otherwise defined, all technical and scientific terms used herein have the same meanings as those commonly understood by those skilled in the art to which the present disclosure belongs. The terms used herein are merely for the purpose of describing specific embodiments, but are not intended to limit the present disclosure. The terms "include" and "have" and any variations thereof in the specification and the claims of the present disclosure as well as the above description of the drawings are intended to cover non-exclusive inclusions.

In the description of the embodiments of the present disclosure, the technical terms "first", "second", "third", and the like, are used only to distinguish between different objects and are not to be understood as indicating or implying a relative importance or implicitly specifying the number, particular order, or primary and secondary relationship of the technical features indicated. In the description of the embodiments of the present disclosure, "a plurality of" means two or more, unless otherwise explicitly and specifically defined.

The reference to "embodiments" herein means that specific features, structures or characteristics described in combination with the embodiments may be included in at least one embodiment of the present disclosure. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present disclosure, the term "and/or" is simply a description of an association of associated objects, which indicates that there may exist three relationships, for example, A and/or B may represent three situations: A exists alone, both A and B exist, and B exists alone. In addition, the character "/" herein generally means that the associated objects before and after it are in an "or" relationship.

In the description of the embodiments of the present disclosure, the technical terms "top", "bottom", "upper", "lower", and the like indicate orientations or positional relationships based on the orientations or positional relationships shown in the drawings, and are intended only to facilitate and simplify the description of the embodiments of the present disclosure, and are not intended to indicate or imply that the apparatus or element referred to must have a particular orientation, or be constructed, operated, or used in a particular orientation, and therefore should not be construed as limitation of the embodiments of the present disclosure.

In the description of the embodiments of the present disclosure, unless otherwise explicitly specified and defined, the technical terms such as "mount", "link", "connect" and "fix" should be understood in a broad sense. For example, the connection may be fixed connection, detachable connection or integrated connection, may be mechanical connection or electrical connection, or may be direct connection, indirect connection through an intermediate, internal communication between two elements or interaction relationship between two elements. For those of ordinary skill in the art, the specific meanings of the above terms in the embodiments of the present disclosure can be understood according to specific situations.

In the description of the embodiments of the present disclosure, unless otherwise explicitly specified and defined, the technical term "contact" should be understood in a broad sense, which may be direct contact, or contact through an intermediate layer, or contact between two objects with little or no interaction force, or contact between two objects with an interaction force.

At present, new energy batteries are increasingly widely used in daily life and industry. New energy batteries are not only used in energy storage power systems such as hydroelectric, thermal power, wind power and solar power stations, but are also widely used in electric transportation vehicles such as electric bicycles, electric motorcycles, electric vehicles, as well as in aerospace and many other fields.

In the related art, a terminal post is provided with a first connection portion for welding to a tab and a second connection portion for welding to a busbar. Both the first connection portion and the second connection portion form a molten pool of a certain thickness during the welding process. In the related art, the first connection portion and the second connection portion are arranged along the thickness direction of the terminal post, resulting in a large dimension occupied by the terminal post in the thickness direction of the terminal post, thereby occupying a portion of the volume of the bare cell. This leads to a low space utilization rate of the battery cell, and the small volume of the bare cell results in low energy density of the battery cell.

The present disclosure reduces the occupation of the terminal post 3 in the thickness direction 3b of the terminal post 3 by arranging the first connection portion 30 and the second connection portion 31 side by side, so that the volume of the bare cell 2 can be as large as possible, increasing the space utilization rate of the battery cell and improving the energy density of the battery cell.

The solutions of the embodiments of the present disclosure can be, but are not limited to, applied to a battery pack including a battery cell or a battery unit, and can also be applied to an electric apparatus including a battery cell and a battery pack.

The present disclosure provides an electric apparatus. The electric apparatus includes an apparatus body and a battery pack. The battery pack is configured to supply power to the apparatus body.

The electric apparatus is an apparatus that uses electrical energy as a power source to achieve corresponding functions by consuming electrical energy. By way of example, the electric apparatus may be, but is not limited to, a mobile phone, a tablet, a laptop, an electric toy, an electric tool, a battery vehicle, an electric vehicle, a ship, a spacecraft, and the like. The electric toy may include a fixed or mobile electric toy, such as a game machine, an electric automobile toy, an electric ship toy, or an electric aircraft toy. The spacecraft may include an aircraft, a rocket, a space shuttle, a spacecraft, or the like.

The apparatus body refers to the body structure that consumes electric energy to achieve the corresponding function. For example, the electric apparatus may be a mobile phone, the apparatus body is a part capable of realizing functions such as communication, and power is supplied to the part capable of realizing functions such as communication through a battery cell or a battery pack. For example, the electric apparatus may be a car, in which the apparatus body is a part for a passenger to sit in and that can travel on the road, and power is supplied to the part for a passenger to sit in and that can travel on the road through a battery cell or a battery pack.

A battery pack refers to a device capable of outputting electrical energy. As an example, a battery pack composed of battery cells can output electrical energy. As an example, a battery pack composed of battery modules, which are in turn composed of battery cells, can output electrical energy.

Description is to be made by taking the electric apparatus in an embodiment of the present application being a vehicle as an example.

The vehicle provided by an embodiment of the present application may be a fuel vehicle, a gas vehicle, or a new-energy vehicle, and the new-energy vehicle may be an all-electric vehicle, a hybrid electric vehicle, an extended range electric vehicle, or the like. A battery pack is provided inside the vehicle, and the battery pack may be arranged at the bottom or head or tail of the vehicle. The battery pack may be used to supply power to the vehicle. For example, the battery pack may be used as an operating power source of the vehicle. The vehicle may further include a controller and a motor. The controller may be used to control the battery pack to supply power to the motor. For example, the battery pack may serve to satisfy the operating power demand when the vehicle is starting, navigating, and traveling.

In some embodiments of the present disclosure, the battery pack may not only be used as the operating power source of the vehicle, but also be used as a driving power source of the vehicle to replace or partially replace fuel or natural gas to provide driving power for the vehicle.

The present disclosure further provides a battery pack. The battery pack includes a mounting case and a battery unit. The battery unit is disposed inside the mounting case.

The present disclosure further provides a battery unit. The battery unit includes at least two battery cells and one or at least two busbars. The busbars are each electrically connected to two different battery cells. As an example, the number of battery cells may be a plurality, and the plurality of battery cells may be connected in series or in parallel or in series-parallel connection, where the parallel-series connection refers to the case where some of the plurality of battery cells are connected in series and some of them are connected in parallel. The plurality of battery cells may be directly connected in series, in parallel, or in series-parallel connection, and then an entire unit formed by the plurality of battery cells can be placed inside a box. Definitely, the plurality of battery cells can first be connected to be battery modules either in series, parallel, or in series-parallel connection, and then a plurality of battery modules can be connected to form an entire unit either in series, parallel, or in series-parallel connection, and then an entire unit formed by the plurality of battery cells connected either in series, parallel, or in series-parallel connection can be placed inside the box. The battery pack may further include another structure. For example, the battery pack may further include a bus component for electrically connecting the plurality of battery cells to each other.

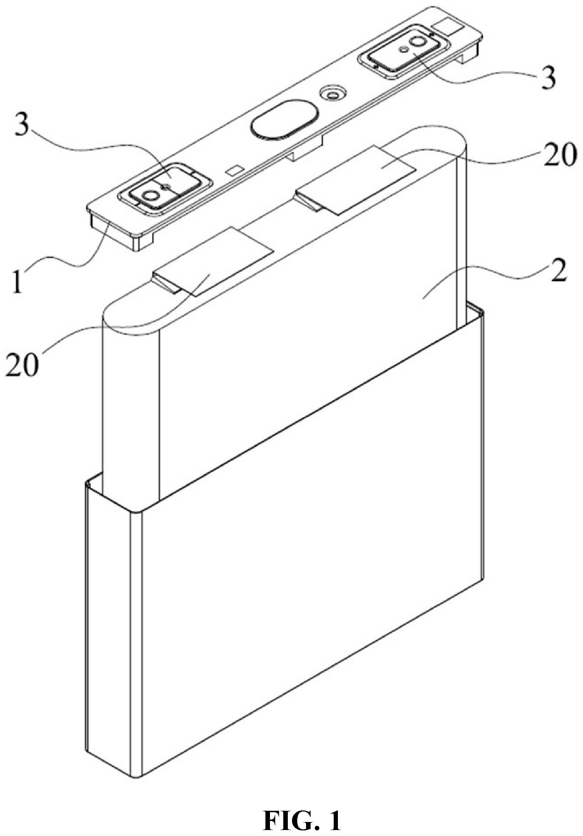

The present disclosure further provides a battery cell. Referring to FIG. 1 to FIG. 4, the battery cell includes a shell assembly 1, a bare cell 2, and terminal posts 3. The bare cell 2 is disposed inside the shell assembly. The terminal posts 3 are disposed on the shell assembly 1, and the terminal posts 3 are electrically connected to tabs 20 of the bare cell 2. The number of the terminal posts 3 is at least two, where at least one of the terminal posts 3 is electrically connected to a positive tab 20 of the bare cell 2, and at least one of the terminal posts 3 is electrically connected to a negative tab 20 of the bare cell 2. The terminal posts 3 each include a first connection portion 30 and a second connection portion 31 connected to each other, where when projected along an arrangement direction of the bare cell 2 and the terminal posts 3, a projection region of the first connection portion 30 and a projection region of the second connection portion 31 do not overlap with each other, and the first connection portion 30 is configured to be welded to the tab 20 of the bare cell 2, and the second connection portion 31 is configured to be welded to a busbar.

A battery cell refers to a unit capable of realizing mutual conversion between chemical energy and electrical energy.

In the embodiments of the present disclosure, the battery cell may be a secondary battery. The secondary battery refers to a battery cell that can be charged to activate the active material and continue to be used after the battery cell is discharged.

In the embodiments of the present disclosure, the battery cell may be a lithium-ion battery, a sodium ion battery, a sodium/lithium ion battery, a lithium metal battery, a sodium metal battery, a lithium sulfur battery, a magnesium-ion battery, a nickel hydrogen battery, a nickel cadmium battery, a lead storage battery, etc., which is not limited in the embodiments of the present disclosure.

As an example, the present disclosure does not limit the type of the bare cell 2. The bare cell 2 may be a prismatic wound cell or a stacked cell.

When projected along the arrangement direction of the bare cell 2 and the terminal posts 3, that the projection region of the first connection portion 30 and the projection region of the second connection portion 31 do not overlap with each other means that a contour line of the projection region of the first connection portion 30 may meet a contour line of the projection region of the second connection portion 31, but the projection region of the first connection portion 30 and the projection region of the second connection portion 31 have no intersecting portion.

In the solution of the embodiments of the present disclosure, the terminal posts 3 are disposed on the shell assembly 1, where the first connection portion 30 of each of the terminal posts 3 is welded to the tab 20 of the bare cell 2, and the second connection portion 31 is configured to be welded to the busbar, and when projected along the arrangement direction of the bare cell 2 and the terminal posts 3, the projection region of the first connection portion 30 and the projection region of the second connection portion 31 do not overlap with each other. The first connection portion 30 and the second connection portion 31 need to be welded to the tab 20 and the busbar by means of welding, respectively. Arranging the first connection portion 30 and the second connection portion 31 side by side can reduce the occupation of the overall terminal post 3 in the height direction of the battery cell, so that under the condition of a fixed height of the battery cell, the height of the bare cell 2 can be made as large as possible, thereby increasing the energy density of the battery cell.

It can be understood that the present disclosure is not limited to the first connection portion 30 being welded to the tab 20 of the bare cell 2. As an example, an adapter piece is separately welded to the tab 20 of the bare cell 2 and the first connection portion 30 to achieve electrical connection between the first connection portion 30 and the tab 20 of the bare cell 2.

As an example, each busbar is electrically connected to a terminal post 3 of a corresponding one of the battery cells and to the second connection portion 31 of a corresponding another one of the battery cells.

In an embodiment, a material of the busbar is the same as a material of the second connection portion 31.

In the embodiments of the present disclosure, a material of the busbar is the same as a material of the second connection portion 31. The convection ability between the busbar and the second connection portion 31 is relatively good.

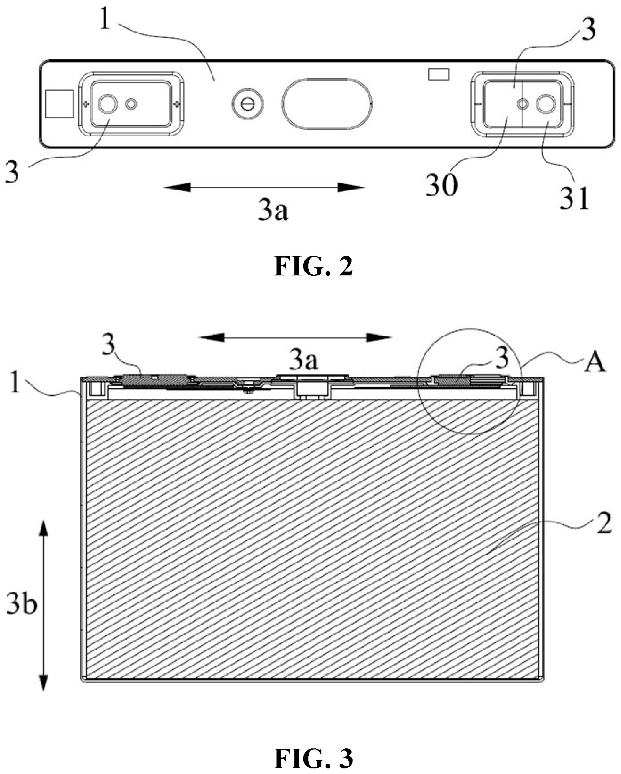

In an embodiment, referring to FIG. 2, at least one terminal post 3 is a composite terminal post 3, the first connection portion 30 and the second connection portion 31 of the composite terminal post 3 being made of different materials.

In the solution of the embodiment of the present disclosure, the material of the tab 20 welded to the first connection portion 30 is the same as the material of the first connection portion 30, so the convection capability between the first connection portion 30 and the corresponding tab 20 is relatively good. The material of the positive tab 20 of the bare cell 2 is different from the material of the negative tab 20. After the busbar is welded to the second connection portion 31, it needs to be welded to the corresponding tab 20 of another battery cell. Correspondingly, the materials of the first connection portion 30 and the second connection portion 31 are different. Furthermore, a terminal post 3 made of composite materials can combine the advantages of multiple materials to increase the current carrying capacity and corrosion resistance of the terminal post 3.

It can be understood that the present disclosure is not limited to at least one terminal post 3 being a composite terminal post 3. As an example, the materials of the first connection portion 30 and the second connection portion 31 of all the terminal posts 3 are the same material.

As an example, the material of the first connection portion 30 and the material of the second connection portion 31 of the terminal post 3 for electrical connection with the positive tab 20 of the bare cell 2 are consistent, and the terminal post 3 for electrical connection with the negative tab 20 of the bare cell 2 is a composite terminal post 3.

As an example, the material of the first connection portion 30 is the same as the material of the negative tab 20 of the bare cell 2, and the material of the second connection portion 31 is the same as the material of the busbar.

In an embodiment, the material of the first connection portion 30 of the composite terminal post 3 is copper, and the material of the second connection portion 31 of the composite terminal post 3 is aluminum.

As an example, the first connection portion 30 and the second connection portion 31 may be connected by means of heating and pressing to form the composite terminal post 3.

In the solution of the embodiment of the present disclosure, the material of the first connection portion 30 is copper, and the material of the second connection portion 31 is aluminum. The copper-aluminum composite terminal post 3 has good corrosion resistance and can maintain good stability under various environmental conditions. Furthermore, the copper-aluminum composite terminal post 3 also has good wear resistance, and thus can withstand the influence of stress during the operation of the battery, and is not prone to damage.

It can be understood that the present disclosure is not limited to the materials of the first connection portion 30 and the second connection portion 31 of the composite terminal post 3 being copper and aluminum respectively. As an example, the material of the first connection portion 30 in the composite terminal post 3 is nickel, the material of the second connection portion 31 is cobalt, the material of the negative tab 20 of the bare cell 2 is nickel, and the material of the positive tab 20 of the bare cell 2 is cobalt.

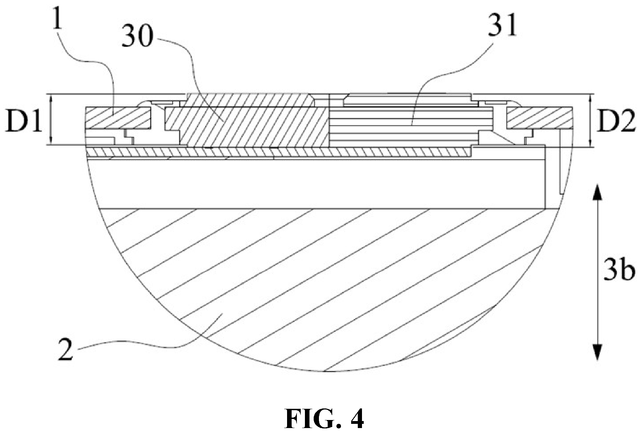

In an embodiment, referring to FIG. 4, a thickness dimension of the first connection portion 30 ranges from 0.5 mm to 5 mm.

As an example, a thickness direction 3b of the first connection portion 30 is arranged along an arrangement direction of the terminal posts 3 and the battery cell.

As an example, the thickness dimension of the first connection portion 30 is shown as dimension D1 in FIG. 4.

As an example, the thickness dimension of the first connection portion 30 is 0.5 mm, 1.0 mm, 1.5 mm, 2.5 mm, 3.5 mm, 4 mm, 4.5 mm or 5.0 mm.

It can be understood that the thickness dimension of the first connection portion 30 can be measured and obtained by a vernier caliper under normal temperature and normal pressure conditions before the first charging of the battery cell.

In the solution of the embodiments of the present disclosure, the thickness of the first connection portion 30 being within a relatively suitable range can balance achieving a relatively high welding strength between the first connection portion 30 and the tab 20 and making the thickness of the terminal post 3 as small as possible, thereby making the energy density of the battery cell as large as possible.

In an embodiment, referring to FIG. 4, a thickness dimension of the second connection portion 31 ranges from 1.5 mm to 5 mm.

As an example, the thickness direction 3b of the second connection portion 31 is arranged along the arrangement direction of the terminal posts 3 and the battery cell.

As an example, the thickness dimension of the second connection portion 31 is 1.5 mm, 2.0 mm, 2.5 mm, 3.0 mm, 3.5 mm, 4.0 mm, 4.5 mm or 5.0 mm.

As an example, the thickness dimension of the second connection portion 31 is shown as dimension D2 in FIG. 4.

It can be understood that the thickness dimension of the second connection portion 31 can be measured and obtained by a vernier caliper under normal temperature and normal pressure conditions before the first charging of the battery cell.

In the embodiment of the present disclosure, the thickness of the second connection portion 31 being within a relatively suitable range can balance achieving a relatively high welding strength between the second connection portion 31 and the busbar and making the thickness of the terminal post 3 as small as possible, thereby making the energy density of the battery cell as large as possible.

In an embodiment, referring to FIG. 4, a thickness of the first connection portion 30 is equal to a thickness of the second connection portion 31.

In the embodiment of the present disclosure, the thickness of the first connection portion 30 is equal to the thickness of the second connection portion 31, which reduces the difficulty of positioning the first connection portion 30 and the second connection portion 31 during the connection process, thereby making the processing of the terminal post 3 relatively simple.

It can be understood that the present disclosure is not limited to the thickness of the first connection portion 30 being equal to the thickness of the second connection portion 31. As an example, the thickness of the second connection portion 31 is greater than the thickness of the first connection portion 30.

In an embodiment, referring to FIG. 3, the terminal post 3 for electrical connection with the positive tab 20 of the bare cell 2 and the terminal post 3 for electrical connection with the negative tab 20 of the bare cell 2 are arranged at intervals along a preset direction 3a, the preset direction 3a being arranged intersecting with the arrangement direction of the terminal posts 3 and the bare cell 2, and the first connection portion 30 and the second connection portion 31 are arranged along the preset direction 3a.

As an example, referring to FIG. 3, the preset direction 3a is arranged orthogonally to the arrangement direction of the terminal posts 3 and the bare cell 2.

In the embodiment of the present disclosure, the first connection portion 30 and the second connection portion 31 are arranged along the preset direction 3a, and the shell assembly 1 can have a large space to arrange the first connection portion 30 and the second connection portion 31, so that the dimensions of the first connection portion 30 and the second connection portion 31 along the preset direction 3a can be made large, thereby reducing the difficulty of positioning the first connection portion 30 and the second connection portion 31 during the welding process, thus reducing the manufacturing difficulty of the battery cell.

It can be understood that the present disclosure is not limited to the first connection portion 30 and the second connection portion 31 being arranged along the preset direction 3a. In an embodiment, the arrangement direction of the first connection portion 30 and the second connection portion 31 is arranged intersecting with the arrangement direction of the terminal posts 3 and the bare cell 2, and the arrangement direction of the first connection portion 30 and the second connection portion 31 is arranged intersecting with the preset direction 3a.

In an embodiment, along the preset direction 3a, a dimension of the second connection portion 31 is greater than or equal to a dimension of the first connection portion 30.

In the embodiment of the present disclosure, during the welding process between the terminal post 3 and the busbar, the positioning difficulty is greater than that during the welding between the terminal post 3 and the tab 20. The dimension of the second connection portion 31 being greater than or equal to the dimension of the first connection portion 30 can alleviate the situation where the positioning of the busbar needs to take a long time during the welding process between the second connection portion 31 and the busbar, thereby improving the welding efficiency.

It can be understood that the embodiments of the present disclosure are not limited to that along the preset direction 3a, the dimension of the second connection portion 31 is greater than or equal to the dimension of the first connection portion 30. In an embodiment, along the preset direction 3a, the dimension of the second connection portion 31 is smaller than the dimension of the first connection portion 30.

In an embodiment, referring to FIG. 1 to FIG. 4, the battery cell includes a shell assembly 1, a bare cell 2, and terminal posts 3. The bare cell 2 is disposed inside the shell assembly 1. The terminal posts 3 are disposed on the shell assembly 1, and the terminal posts 3 are electrically connected to tabs 20 of the bare cell 2. The number of the terminal posts 3 being at least two, where at least one of the terminal posts 3 is electrically connected to a positive tab 20 of the bare cell 2, and at least one of the terminal posts 3 is electrically connected to a negative tab 20 of the bare cell 2. The terminal posts 3 each include a first connection portion 30 and a second connection portion 31 connected to each other, where when projected along an arrangement direction of the bare cell 2 and the terminal posts 3, a projection region of the first connection portion 30 and a projection region of the second connection portion 31 do not overlap with each other. The first connection portion 30 is configured to be welded to a tab 20 of the bare cell 2 and the second connection portion 31 is configured to be welded to a busbar. The terminal post 3 electrically connected to the negative tab 20 of the bare cell 2 is a composite terminal post 3. The material of the first connection portion 30 of the composite terminal post 3 is copper, and the material of the second connection portion 31 of the composite terminal post 3 is aluminum. A thickness dimension of the first connection portion 30 ranges from 0.5 mm to 5.0 mm, and a thickness dimension of the second connection portion 31 ranges from 1.5 mm to 5.0 mm. The thickness of the first connection portion 30 is equal to the thickness of the second connection portion 31. The first connection portion 30 and the second connection portion 31 are arranged along the preset direction 3a, and along the preset direction 3a, a dimension of the second connection portion 31 is greater than or equal to a dimension of the first connection portion 30.

The aforementioned embodiments are merely used for describing the technical solution of the present disclosure, instead of limiting the present disclosure; although the present disclosure is described in detail with reference to the foregoing embodiments, persons of ordinary skill in the art should understand that they can still make modifications on the technical solution recorded in the above embodiments, or perform equivalent replacements on a part of technical features thereof. These modifications or replacements do not make the essence of the corresponding technical solution depart from the scope of the technical solutions of various embodiments of the present disclosure, and shall fall within the scope of the specification of the present disclosure. In particular, the technical features mentioned in the various embodiments can be combined in any manner as long as there is no structural conflict. The present disclosure is not limited to the specific embodiments disclosed herein, but rather includes all technical solutions falling within the scope of the claims.

## Claims

1. A battery cell, comprising:
a shell assembly;
a bare cell disposed inside the shell assembly; and
terminal posts disposed on the shell assembly, the terminal posts being electrically connected to tabs of the bare cell, the number of the terminal posts being at least two, wherein at least one of the terminal posts is electrically connected to a positive tab of the bare cell, and at least one of the terminal posts is electrically connected to a negative tab of the bare cell, and the terminal posts each comprising a first connection portion and a second connection portion connected to each other, wherein when projected along an arrangement direction of the bare cell and the terminal posts, a projection region of the first connection portion and a projection region of the second connection portion do not overlap with each other, and the first connection portion is welded to a tab of the bare cell and the second connection portion is configured to be welded to a busbar.

2. The battery cell according to claim 1, wherein at least one of the terminal posts is a composite terminal post, the first connection portion and the second connection portion of the composite terminal post being made of different materials, and a material of the tab welded to the first connection portion being the same as a material of the first connection portion.

3. The battery cell according to claim 2, wherein the material of the first connection portion of the composite terminal post is copper, and the material of the second connection portion of the composite terminal post is aluminum.

4. The battery cell according to any one of claims 1-3, wherein a thickness dimension of the first connection portion ranges from 0.5 mm to 5.0 mm.

5. The battery cell according to any one of claims 1-4, wherein a thickness dimension of the second connection portion ranges from 1.5 mm to 5.0 mm.

6. The battery cell according to any one of claims 1-5, wherein a thickness of the first connection portion is equal to a thickness of the second connection portion.

7. The battery cell according to any one of claims 1-6, wherein the terminal post for electrical connection with the positive tab of the bare cell and the terminal post for electrical connection with the negative tab of the bare cell are arranged at intervals along a preset direction, the arrangement direction of the terminal posts and the bare cell being arranged intersecting with the preset direction, and the first connection portion and the second connection portion are arranged along the preset direction.

8. The battery cell according to claim 7, wherein along the preset direction, a dimension of the second connection portion is greater than or equal to a dimension of the first connection portion.

9. A battery unit, comprising:
at least two battery cells according to any one of claims 1-8; and
one or at least two busbars, each of the busbars being electrically connected to the terminal post of a corresponding one of the battery cells and the second connection portion of a corresponding another one of the battery cells, respectively.

10. The battery unit according to claim 9, wherein a material of the busbar is the same as a material of the second connection portion.

11. A battery pack, comprising:
a mounting case; and
at least one battery unit according to claim 9 or 10, disposed inside the mounting case.

12. An electric apparatus, comprising:
an apparatus body; and
the battery pack according to claim 11, configured to supply power to the apparatus body.
